# EUROPÄISCHE PATENTSCHRIFT

(11) **EP 3 509 778 B1**
(45) Veröffentlichungstag und Bekanntmachung des Hinweises auf die Patenterteilung: **11.12.2024**
(21) Anmeldenummer: 17764546.2
(22) Anmeldetag: 05.09.2017
(51) Int. Cl.: B23B 25/00, B23B 27/10, B23Q 11/14, B23B 31/00, B23Q 17/09

(54) **ZERSPANUNGSWERKZEUG, WERKZEUGANORDNUNG UND SCHNEIDELEMENT-TEMPERIERVERFAHREN**
MACHINING TOOL, TOOL SYSTEM AND CUTTING ELEMENT TEMPERATURE CONTROL METHOD
OUTIL D'USINAGE, ENSEMBLE OUTIL ET PROCÉDÉ DE RÉGULATION DE TEMPÉRATURE D'ÉLÉMENT DE COUPE

(30) Priorität: 12.09.2016 DE 102016117059
(43) Veröffentlichungstag der Anmeldung: 17.07.2019
(73) Patentinhaber: MAS GmbH, 71229 Leonberg (DE); H&H Gerätebau GmbH, 88085 Langenargen (DE); Hochschule Karlsruhe Technik und Wirtschaft, 76133 Karlsruhe (DE)
(72) Erfinder: KNIPPING, Tobias, 76185 Karlsruhe (DE); HAAS, Rüdiger, 78737 Fluorn-Winzeln (DE); MÜLLER, Timo, 67377 Gommersheim (DE); BRENNER, Wolf, 70806 Kornwestheim (DE); MÖRK, Thomas, 71272 Renningen (DE); BÖLKE, Uwe, 71737 Kirchberg/Murr (DE); HERRMANN, Norbert, 88069 Tettnang (DE); KRAUS, Jakob, 88069 Tettnang (DE)
(74) Vertreter: Ostertag & Partner Patentanwälte mbB
(86) Internationale Anmeldenummer: PCT/EP2017/072227
(87) Internationale Veröffentlichungsnummer: WO 2018/046489

(56) Entgegenhaltungen:
- DE-C1- 19 730 539
- JP-A- S58 160 001
- JP-U- S5 728 802
- SU-A1- 795 883
- SU-A2- 1 063 541
- US-A- 3 077 802
- US-A- 3 971 114
- US-A- 5 799 553

## Beschreibung

Die vorliegende Erfindung betrifft ein Zerspanungswerkzeug gemäß dem Oberbegriff des Anspruchs 1. JP S58 160001 A offenbart ein Beispiel eines solchen Zerspanungswerkzeugs.

Ferner betrifft die vorliegende Erfindung ein Verfahren zum Temperieren eines Schneidelementes, das mit einem Werkzeughalter verbunden ist.

Auf dem Gebiet der spanenden Fertigung ist es bekannt, dass im Bereich des Eingriffs zwischen Schneidelement und Werkstück hohe Temperaturen auftreten können, bedingt durch den spanenden Eingriff zwischen Schneidelement und Werkstück. Insbesondere bei der Zerspanung von hochlegierten Spänen treten aufgrund der hohen Zähigkeit und der geringen Wärmeleitfähigkeit sehr hohe Temperaturen an der Schneide auf. Dies führt zu einem erhöhten Verschleiß des Schneidelementes. Zudem können durch hohe Temperaturen Diffusionsvorgänge, chemische Reaktionen und thermische Entfestigungen auftreten. Es ist seit langem bekannt, den Eingriffsbereich zwischen Schneidelement und Werkstück durch Fluide zu kühlen. Klassisch kann dies über Schmierstoffe erfolgen, die dazu dienen können, den Schneidvorgang zu erleichtern, insbesondere aber auch Wärme aufnehmen. Das hierbei verwendete Fluid muss aufgefangen, gereinigt und ggf. entsorgt werden, was den Zerspanungsprozess teuer macht.

Zum Kühlen von Zerspanungsprozessen, bei denen hochlegierte Späne oder dergleichen zerspant werden, ist es auch bekannt, flüssigen Stickstoff oder CO₂ von außen an den Prozess zu bringen und dort verdampfen zu lassen. Diese sogenannte "kryogene" Zerspanung kann jedoch zu einer Aufhärtung des Werkstücks führen, und zwar durch den Stickstoff oder Kohlenstoff in dem zugeführten Fluid. Zudem ist dieses Verfahren besonders teuer, da das Kühlmedium bzw. Kühlmittel im Prozess verloren geht. Ggf. sind weitere apparative Maßnahmen vorzusehen, um die Umgebung zu schützen.

Die zur Kühlung zuzuführenden Fluide können von außen auf den Bereich des Eingriffs zwischen Schneidelement und Werkstück aufgebracht werden. Sie können jedoch auch durch Kanäle im Inneren eines Werkzeughalters zugeführt werden, an dem ein Schneidelement festgelegt ist.

Wenn der in dem Schneidelement verwendete Schneidstoff beispielsweise PKD (polykristalliner Diamant) ist, ist die Gefahr hoch, dass Kohlenstoff aus dem Diamantmaterial in ein Stahl-Werkzeug diffundiert. Daher ist PKD in der Regel nicht zur Eisenzerspanung geeignet und ist zudem sehr teuer.

Es ist vor diesem Hintergrund eine Aufgabe der Erfindung, ein verbessertes Zerspanungswerkzeug sowie ein verbessertes Verfahren zum Temperieren eines Schneidelementes anzugeben.

Die obige Aufgabe wird bei dem eingangs genannten Zerspanungswerkzeug durch das Zerspanungswerkzeug gemäß dem Anspruch 1 gelöst.

Schließlich wird die obige Aufgabe gelöst durch ein Verfahren zum Temperieren eines Schneidelements gemäss Anspruch 6.

Ein wesentlicher Vorteil des erfindungsgemäßen Zerspanungswerkzeuges liegt darin, dass die Kühleinrichtung einen geschlossenen Kühlmittelkreislauf aufweist, sodass die Kühlung durchgeführt werden kann, ohne dass ein Kühlmedium bzw. ein Kühlmittel unkontrolliert verteilt wird und anschließend aufgefangen und ggf. gereinigt werden muss. Der erfindungsgemäße Kühlmittelkreislauf ist ein geschlossener Kreislauf, bei dem das Kühlmittel im Bereich des Wärmeübertragers erwärmt wird und dabei Wärme von dem Zerspanungsprozess aufnimmt. Das so erwärmte Kühlmittel wird anschließend in den geschlossenen Kühlmittelkreislauf zurückgegeben und dort auf geeignete Weise wieder abgekühlt.

Das Kühlmittel ist ein Kältemittel und der geschlossene Kühlkreislauf beinhaltet eine Kältemaschine. Bei Verwendung einer Kältemaschine kann das Kühlmittel verdampfen und dampfförmig aus dem Wärmeübertragergehäuse abgeführt werden.

Das Schneidelement kann als Schneidstoff PKD aufweisen, weist jedoch vorzugsweise CBN (kubisches Bornitrid) auf. Generell ist es auch denkbar, als Schneidstoff Stahl, Hartmetall, Cermet oder eine andere Schneidkeramik zu verwenden.

Durch die Maßnahme, zwischen dem Schneidelement und dem Wärmeübertragergehäuse ein Wärmeleitelement anzuordnen, ist es möglich, die im Bereich des Schneidelementes entstehende Wärme effektiv hin zu dem Wärmeübertragergehäuse zu übertragen. Das Wärmeleitelement hat dabei insbesondere eine höhere Leitfähigkeit als der Werkzeughalter. Der Werkzeughalter ist vorzugsweise aus einem Stahlmaterial hergestellt. Das Wärmeleitelement ist vorzugsweise aus Kupfer hergestellt, kann jedoch auch aus einem anderen sehr gut wärmeleitenden Material hergestellt sein. Ferner kann das Wärmeleitelement auch aus CBN hergestellt sein.

Durch die Anordnung des Wärmeübertragers in dem Werkzeughalter und durch Kopplung des Schneidelementes mit dem Wärmeübertragergehäuse über ein Wärmeleitelement kann das Schneidelement sehr effizient gekühlt werden. Dies ermöglicht es, dass der Werkzeughalter beim Zerspanungsprozess thermisch stabil bleibt. Ferner können mit einem solchen Zerspanungswerkzeug Zerspanvorgänge durchgeführt werden, bei denen üblicherweise ein großer Energieeintrag in das Schneidelement und den Halter bedingt wird. Der Energieeintrag kann kompensiert werden. Hierdurch kann entweder die Stückgeschwindigkeit erhöht werden oder es kann die Standzeit des Zerspanungswerkzeuges bzw. des Schneidelementes hiervon verlängert werden.

Insgesamt kann eine Einsparung von Kühlmittel erreicht werden. Die Bearbeitung kann als trockene Bearbeitung erfolgen. Der Zerspanungsprozess bzw. Bearbeitung können bei niedriger Temperatur durchgeführt werden. Ferner ist die Bearbeitung von Werkstücken möglich, die aus neuartigen Werkstoffen, wie Nickelbasislegierungen, Titan, Magnesium etc. hergestellt sind, und zwar bei reduziertem Verschleiß des Schneidelementes.

Das Wärmeleitelement kann plattenförmig sein oder kann stabförmig sein. Besonders bevorzugt ist es, wenn das Wärmeleitelement ein mit dem Werkzeughalter verbundenes Schneidelement berührt, um einen geringen Wärmeübergangswiderstand zu realisieren. Aus dem gleichen Grund ist es bevorzugt, wenn das Wärmeleitelement das Wärmeübertragergehäuse berührt, wobei das Wärmeübertragergehäuse vorzugsweise ebenfalls aus einem gut wärmeleitfähigen Material hergestellt ist, wie beispielsweise Stahl oder noch besser wärmeleitend, wie zum Beispiel Kupfer.

Das erfindungsgemäße Zerspanungswerkzeug ist vorzugsweise ein in einer oder mehreren Dimensionen linear bewegbares Werkzeug, bei dem das zu bearbeitende Werkstück drehend angetrieben wird. Hierbei ist die Einrichtung des geschlossenen Kühlmittelkreislaufes konstruktiv vergleichsweise einfach zu realisieren. Generell ist es jedoch auch denkbar, dass das Zerspanungswerkzeug drehend angetrieben wird und ein Zerspanungsprozess durch lineare Relativbewegungen zwischen Werkstück und Zerspanungswerkzeug eingerichtet wird. In diesem Fall ist es bevorzugt, wenn der geschlossene Kühlmittelkreislauf über eine Drehdurchführung an dem Zerspanungswerkzeug eingerichtet wird.

Die Aufgabe wird somit vollkommen gelöst.

Von besonderem Vorzug ist es, wenn das Wärmeübertragergehäuse eine Stirnfläche aufweist, die mit dem Wärmeleitelement in Kontakt steht, wobei in dem Wärmeübertragergehäuse ein Kühlmittelkanal so angeordnet ist, dass über den Kühlmittelkanal zugeführtes Kühlmittel auf die Innenseite der Stirnfläche richtbar ist.

Auf diese Weise kann das Kühlmedium effektiv dazu verwendet werden, um das Schneidelement zu kühlen, und zwar über Kontakt mit dem Werkzeughalter, insbesondere jedoch durch Kontakt mit dem Wärmeleitelement.

Gemäß einer weiteren bevorzugten Ausführungsform ist in dem Wärmeübertragergehäuse ein konzentrisch zu dem Kühlmittelkanal angeordneter Rückströmkanal angeordnet.

Auf diese Weise kann das erwärmte (ggf. verdampfte) Kühlmittel effektiv zurückgeführt werden, und zwar in den geschlossenen Kühlmittelkreislauf hinein. Der Rückströmkanal ist vorzugsweise außen um den Kühlmittelkanal herum angeordnet.

Gemäß einer weiteren bevorzugten Ausführungsform ist das Wärmeübertragergehäuse in eine Wärmeübertrager-Aufnahme in Form einer Sacklochbohrung in dem Werkzeughalter eingesetzt, wobei die Sacklochbohrung an das Wärmeleitelement angrenzt oder darin mündet und/oder wobei die Sacklochbohrung im Bereich ihres Bodens eine Entlüftungsöffnung aufweist.

Durch die Maßnahme, die Sacklochbohrung an das Wärmeleitelement angrenzen oder darin münden zu lassen, sodass die Sacklochbohrung sich in das Wärmeleitelement hinein erstreckt, kann eine effektive thermische Kopplung zwischen dem Wärmeübertragergehäuse und dem Wärmeleitelement realisiert werden.

Durch die Maßnahme, im Bereich des Bodens der Sacklochbohrung eine Entlüftungsöffnung vorzusehen, ist es möglich, beim axialen Einschieben des Wärmeübertragergehäuses in die Sacklochbohrung ggf. aufgenommene Luft zu entfernen, sodass ein Luftpolster zwischen einer Stirnfläche des Wärmeübertragergehäuses und dem Wärmeleitelement vermieden werden kann. Ein solches Luftpolster könnte nämlich isolierend wirken.

Gemäß einer weiteren insgesamt bevorzugten Ausführungsform weist der Werkzeughalter eine Halterbasis und einen Schneidelementsitz für das Schneidelement auf, wobei der Werkzeughalter im Bereich des Schneidelementsitzes und/oder um das Wärmeübertragergehäuse herum und/oder um das Wärmeleitelement herum aus einem wärmeisolierenden Material gebildet ist, um eine Wärmeübertragung von dem Schneidelementsitz in Richtung hin zu der Halterbasis zu verringern.

Diese Maßnahme ermöglicht es insbesondere, eine zu große Abkühlung der Halterbasis zu erreichen. In manchen Fällen beinhaltet die Halterbasis einen Halterschaft, der von einer Halteraufnahme gehalten wird. Bei einer zu großen Abkühlung kann diese Festlegung ggf. gelöst werden, insbesondere dann, wenn die Halterbasis aufgrund einer Schrumpfspannung in eine Halteraufnahme eingesetzt ist.

Das wärmeisolierende Material kann beispielsweise ein keramisches Material sein. Das wärmeisolierende Material kann dabei einen Teil des Werkzeughalters bilden. Der Einsatz aus dem wärmeisolierenden Material kann beispielsweise konzentrisch um das Wärmeübertragergehäuse herum angeordnet sein und/oder konzentrisch um das Wärmeleitelement herum.

Ferner ist es vorteilhaft, wenn der Werkzeughalter eine Halterbasis und einen Schneidelementsitz für das Schneidelement aufweist, der von der Halterbasis beabstandet ist, wobei in die Halterbasis eine Halterbasis-Heizeinrichtung integriert ist.

Durch eine derartige Heizeinrichtung kann die Temperatur der Halterbasis ggf. angehoben werden, falls die Kühleinrichtung die Halterbasis zu stark abkühlen sollte, was zu Problemen bei einer Schrumpfspannung oder dergleichen führen könnte. Die Maßnahme einer Halterbasis-Heizeinrichtung kann alternativ oder zusätzlich zu der Maßnahme vorgesehen sein, dass im Bereich des Schneidelementsitzes ein wärmeisolierendes Material an dem Werkzeughalter ausgebildet bzw. enthalten ist.

Bevorzugt ist es ebenfalls, wenn der Werkzeughalter einen Schneidelementsitz für das Schneidelement aufweist, wobei der Schneidelementsitz eine plane Sitzfläche aufweist und wobei das Wärmeleitelement zumindest einen Teil der planen Sitzfläche bildet.

Die Sitzfläche ist zum einen plan, um eine exakte Anordnung des Schneidelementes in Bezug auf den Werkzeughalter zu ermöglichen. Durch die Maßnahme, dass das Wärmeleitelement, das in den Werkzeughalter integriert ist, zumindest einen Teil dieser planen Sitzfläche bildet, kann ein Kontakt zwischen dem Schneidelement und dem Wärmeleitelement mit geringstmöglichem Wärmeübergangswiderstand realisiert werden.

Die plane Sitzfläche wird vorzugsweise bearbeitet, beispielsweise durch Schleifen oder dergleichen, nachdem das Wärmeleitelement in den Werkzeughalter integriert worden ist. Auf diese Weise kann die Sitzfläche einheitlich plan sein, auch wenn das Wärmeleitelement nur einen Teil der Sitzfläche bildet.

Generell ist es möglich, das Wärmeübertragergehäuse und das Wärmeleitelement in beliebiger Art und Weise innerhalb des Werkzeughalters anzuordnen, solange das Wärmeleitelement für eine Wärmekopplung zwischen dem Wärmeübertragergehäuse und dem Schneidelement sorgen kann.

Von besonderem Vorzug ist es jedoch, wenn eine Längsachse des Wärmeübertragergehäuses und eine Längsachse des Wärmeleitelementes quer zueinander ausgerichtet sind.

Hierdurch kann das Wärmeübertragergehäuse mit seiner Längsachse in eine Aufnahmebohrung des Werkzeughalters eingeschoben werden, die bereits aufgrund einer hinreichenden Festigkeit einen gewissen Abstand von dem Schneidelementsitz hat. Das Wärmeleitelement, das quer hierzu ausgerichtet ist, kann diesen Abstand dann konstruktiv auf einfache Art und Weise überbrücken.

Erfindungsgemäß sind die Kühleinrichtung und eine Schneidelement-Heizeinrichtung derart in dem Werkzeughalter integriert, dass eine Regelung des Schneidelementes auf einen Soll-Temperaturbereich möglich ist.

Durch diesen Aspekt der Erfindung kann ein Zerspanungsprozess durchgeführt werden, bei dem eine Temperatur eines Schneidelementes im Wesentlichen konstant ist (innerhalb des vorgegebenen Soll-Temperaturbereiches), der vorzugsweise eine Temperaturspanne von höchstens 100°C abdeckt, insbesondere höchstens 50°C. Mit anderen Worten ist es in bevorzugter Weise möglich, die Temperatur des Schneidelementes innerhalb eines Soll-Temperaturbereiches von 50°C oder weniger zu halten.

Gemäß einer weiteren bevorzugten Ausführungsform liegt der Soll-Temperaturbereich in einer Spanne von 1/5 bis 1/20 einer für einen bestimmten Zerspanungsprozess angestrebten Soll-Temperatur.

Der Zerspanungsprozess kann folglich mit im Wesentlichen konstanter Temperatur durchgeführt werden. Dies kann zu deutlich verbesserten Schneidleistungen führen und/oder zu längeren Standzeiten.

Die Erfindung vorsieht, dass die Temperierung durch eine Regelung erfolgt. Hierbei wird die Temperatur des Schneidelementes gemessen, und zwar vorzugsweise möglichst nahe im Bereich der Schneide, die mit dem Werkstück in Kontakt gelangt.

Eine derartige Temperaturerfassung kann kontaktlos erfolgen, nach der Art eines Pyrometers, oder kontaktierend mittels eines Thermoelementes.

Von besonderem Vorzug ist es, wenn das Schneidelement mittels einer Befestigungseinrichtung lösbar mit dem Werkzeughalter verbunden ist, wobei ein Temperatursensor in die Befestigungseinrichtung integriert ist.

Der Temperatursensor kann beispielsweise durch ein Thermoelement gebildet sein, das vorzugsweise über die Integration in die Befestigungseinrichtung mit dem Schneidelement in Kontakt steht oder zumindest unmittelbar benachbart hierzu ist.

Von besonderem Vorzug ist es, wenn in der Befestigungseinrichtung eine durchgehende Aufnahme bzw. eine Bohrung vorgesehen ist, in die hinein das Thermoelement eingesteckt werden kann und über die die Temperatur des Schneidelementes erfasst werden kann.

Bei dem erfindungsgemäßen Verfahren ist es folglich bevorzugt, wenn die Temperatur des Schneidelementes unter Verwendung der Kühleinrichtung und einer Schneidelement-Heizeinrichtung auf einen Soll-Temperaturbereich der oben beschriebenen Art geregelt wird.

Dabei ist es ferner vorteilhaft, wenn für einen vorbestimmten Zeitraum eine Kühlleistung der Kühleinrichtung konstant gehalten wird, wobei die Regelung der Temperatur durch Einstellung der Heizleistung der Schneidelement-Heizeinrichtung erfolgt.

Hierbei wird vorzugsweise vorgesehen, dass die Kühlleistung auf einen Wert eingestellt wird, bei dem die Temperatur des Schneidelementes unterhalb einer angestrebten Soll-Temperatur liegt. Durch gleichzeitiges Heizen kann dann die angestrebte Soll-Temperatur vergleichsweise einfach eingestellt werden.

Der Grund für diese Maßnahme besteht darin, dass die Kühlleistung einer Kühleinrichtung in der Regel nur relativ träge einstellbar ist, wohingegen das Einstellen einer Heizleistung einer Heizeinrichtung in der Regel relativ flink erfolgen kann.

Die Heizeinrichtung kann vorzugsweise eine elektrische Heizeinrichtung sein.

In manchen Ausführungsformen kann eine Temperatur des Schneidelementes auf Werte unterhalb von 600°C geregelt werden, was es ermöglicht, Stahl mittels eines Schneidwerkzeuges spanend zu bearbeiten, das im Bereich der Schneidkante ein Kohlenstoffbasiertes Material (Schneidstoff) beinhaltet, wie beispielsweise Diamant. Bei dem Schneidstoff kann es sich beispielsweise um PKD handeln.

Der geschlossene Kühlmittelkreislauf beinhaltet vorzugsweise einen Verdichter zum Verdichten von abgeführtem und erwärmtem Kühlmittel sowie einen Verflüssiger, der das Kühlmittel bereitstellt, das dem Wärmeübertragergehäuse zugeführt wird.

Der geschlossene Kühlmittelkreislauf kann folglich durch eine Kältemaschine gebildet sein, die dem Grunde nach dem Prinzip eines Kompressorkühlschranks entspricht. Hierbei wird ein gasförmiges Kühlmittel durch einen Kompressor adiabat verdichtet, wodurch sich das Kühlmittel erwärmt. Im Verflüssiger wird die Wärme an die Umgebung abgegeben, wodurch das Medium kondensiert. Danach strömt es zur Druckabsenkung durch eine Drossel, und von dort weiter in einen Verdampfer.

Der Verdampfer ist vorliegend vorzugsweise durch den Wärmeübertrager realisiert. Die Verdampfung findet dabei vorzugsweise innerhalb des Wärmeübertragergehäuses statt.

Alternativ kann der geschlossene Kühlmittelkreislauf auch durch ein Wärmerohr ("heat pipe") gebildet sein, oder durch einen anderen geschlossenen Kühlmittelkreislauf, bei dem beispielsweise ein Fluid in das Wärmeübertragergehäuse eingeleitet wird, wo es sich erwärmt und von wo es zurückgeleitet wird in einen Kühler, innerhalb dessen das Fluid wieder auf eine Soll-Temperatur abgekühlt wird, um anschließend wiederum dem Wärmeübertragergehäuse zugeführt zu werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine schematische Darstellung einer Werkzeuganordnung mit einer schematischen Darstellung eines erfindungsgemäßen Zerspanungswerkzeuges;
- Figur 2: eine perspektivische Ansicht einer weiteren Ausführungsform des erfindungsgemäßen Zerspanungswerkzeuges;
- Figur 3: eine weitere perspektivische Ansicht des Zerspanungswerkzeuges der Fig. 2;
- Figur 4: eine Draufsicht auf ein Schneidelement des Zerspanungswerkzeuges der Fig. 2 und 3;
- Figur 5: eine Seitenansicht eines Befestigungsbereiches für ein Schneidelement des Zerspanungswerkzeugs der Fig. 2 und 3;
- Figur 6: eine Schnittansicht entlang der Linie VI-VI der Fig. 4;
- Figur 7: eine Schnittansicht entlang der Linie VII-VII der Fig. 4;
- Figur 8: eine Schnittansicht entlang der Linie VIII-VIII der Fig. 5;
- Figur 9: eine Schnittansicht entlang der Linie IX-IX der Fig. 5;
- Figur 10: eine schematische Darstellung einer weiteren Ausführungsform eines erfindungsgemäßen Zerspanungswerkzeuges;
- Figur 11: eine schematische Darstellung einer weiteren Ausführungsform eines weiteren erfindungsgemäßen Zerspanungswerkzeuges; und
- Figur 12: ein Flussdiagramm eines erfindungsgemäßen Zerspanungsverfahrens.

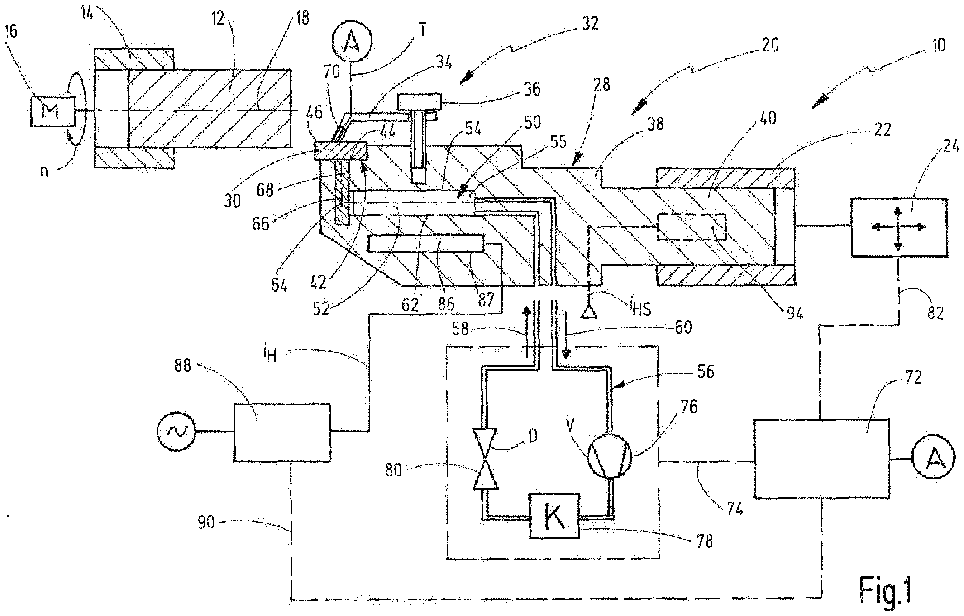

In Fig. 1 ist eine Werkzeuganordnung zur spanenden Fertigung schematisch dargestellt und generell mit 10 bezeichnet. Die Werkzeuganordnung 10 dient zur Durchführung eines Zerspanungsprozesses an einem Werkstück 12, das an einer Werkstückspanneinrichtung 14 eingespannt ist, die mittels eines Motors 16 um eine Drehachse 18 drehend antreibbar ist.

Die Werkzeuganordnung 10 weist ein Zerspanungswerkzeug 20 auf, bei dem es sich vorliegend um ein Drehwerkzeug handelt. Das Zerspanungswerkzeug 20 ist in einer Werkstückspanneinrichtung 22 eingespannt, die mittels eines Stellantriebes 24 in einer oder mehreren Dimensionen relativ zu dem sich drehenden Werkstück 12 bewegbar ist, um den Zerspanungsprozess bzw. Drehprozess durchzuführen.

Das Zerspanungswerkzeug 20 weist einen Werkzeughalter 28 und ein Schneidelement 30 auf. Das Schneidelement 30 kann als Schneidplatte, insbesondere als Wechselplatte, ausgebildet sein. Das Schneidelement 30 ist mittels einer Befestigungseinrichtung 32 mit dem Werkzeughalter lösbar verbunden. Vorliegend ist die Befestigungseinrichtung 32 gebildet durch eine Pratze 34, die das Schneidelement 30 gegen den Werkzeughalter 28 drückt, und zwar mittels einer Schraube 36, die in eine Gewindebohrung des Werkzeughalters 28 geschraubt ist.

Der Werkzeughalter 28 weist eine Halterbasis 38 auf, an der ein Werkzeughalterschaft 40 ausgebildet sein kann. Der Werkzeughalterschaft 40 ist in die Werkstückspanneinrichtung 22 eingespannt, beispielsweise durch eine Schrumpfspannung.

An der Halterbasis 38 ist, an einem dem Werkzeughalterschaft 40 gegenüberliegenden axialen Ende, ein Schneidelementsitz 42 ausgebildet, in den das Schneidelement 40 eingesetzt ist. Der Schneidelementsitz 42 weist eine Sitzfläche 44 auf, die als plane Sitzfläche ausgebildet ist. Das Schneidelement 30 wird auf die plane Sitzfläche 44 aufgelegt und anschließend von der der Sitzfläche 44 gegenüberliegenden Seite mittels der Befestigungseinrichtung 32 eingespannt, also gegen die Sitzfläche 44 gedrückt. Das Schneidelement 30 weist in an sich bekannter Weise eine Schneide 46 auf, die bei dem Zerspanungsprozess an dem Werkstück 12 angreift. Das Schneidelement 30 weist vorzugsweise eine geometrisch bestimmte Schneide 46 auf.

Das Zerspanungswerkzeug 20 beinhaltet ferner eine Kühleinrichtung 50. Die Kühleinrichtung 50 beinhaltet einen Wärmeübertrager 52, der ein Wärmeübertragergehäuse 54 aufweist. Das Wärmeübertragergehäuse 54 ist als längliches, vorzugweise zylindrisches Gehäuse ausgebildet und ist entlang einer Längsachse 55 ausgerichtet.

Der Wärmeübertrager 52 ist Teil eines geschlossenen Kühlmittelkreislaufes 56 der Kühleinrichtung 50, in dem ein Kältemittel zirkuliert. Kühlmittel 58 wird dem Wärmeübertrager 52 zugeführt. In dem Wärmeübertrager 52 erwärmtes Kühlmittel wird von dem Wärmeübertrager 52 weggeführt, wie es bei 60 gezeigt ist und dann erneut auf eine niedrigere Temperatur gebracht, um dann mit der wiederum niedrigeren Temperatur bei 58 dem Wärmeübertrager zugeführt zu werden.

Der Wärmeübertrager 52 ist in einer Wärmeübertrager-Aufnahme 62 des Werkzeughalters 28 aufgenommen. Die Wärmeübertrager-Aufnahme 62 kann beispielsweise eine Bohrung sein, in die das Wärmeübertragergehäuse 54 entlang der Längsachse 55 eingeschoben wird.

Das Wärmeübertragergehäuse 54 weist dabei eine Stirnfläche 64 auf, die im Bereich des Schneidelementsitzes 42 innerhalb des Werkzeughalters 28 angeordnet ist. Die Stirnfläche 64 ist vorzugsweise jene Fläche des Wärmeübertragers 52, die am kältesten ist, da das Kühlmittel 58 vorzugsweise auf die Stirnfläche 64 gerichtet und/oder dort verdampft wird.

In den Werkzeughalter 28 ist ferner ein Wärmeleitelement 66 integriert. Das Wärmeleitelement 66 ist so in dem Werkzeughalter 28 angeordnet, dass es sich zwischen dem Wärmeübertrager 52 und dem Schneidelementsitz 42 erstreckt. Vorzugsweise bildet das Wärmeleitelement 66 dabei zumindest einen Teil der Sitzfläche 44. Das Wärmeleitelement 66 kann beispielsweise im Wesentlichen zylindrisch ausgebildet sein, mit einer Längsachse 68, die quer zu der Sitzfläche 44 ausgerichtet ist und die vorzugsweise gleichfalls quer zu der Längsachse 55 des Wärmeübertragergehäuses 54 ausgerichtet ist. Das Wärmeübertragergehäuse 54 ist vorzugsweise so in Bezug auf das Wärmeleitelement 66 angeordnet, dass die Stirnfläche 64 das Wärmeleitelement 66 berührt oder in dem Wärmeleitelement 66 versenkt ist. Hierzu kann das Wärmeleitelement 66 beispielsweise einen Teil der Wärmeübertrager-Aufnahmebohrung 62 bilden.

Das Wärmeleitelement 66 ist vorzugsweise aus einem Material hergestellt, das eine größere Leitfähigkeit aufweist, als das Material des Werkzeughalters 28 im Bereich des Schneidelementsitzes 42.

Das Zerspanungswerkzeug 20 beinhaltet ferner einen Temperatursensor 70 zur Erfassung der Temperatur des Schneidelementes 30. Vorliegend ist dieser Temperatursensor 70 in einer nicht näher bezeichneten Aufnahme, insbesondere einer Bohrung, der Pratze 34 der Befestigungseinrichtung 32 aufgenommen und kann beispielsweise durch ein Thermoelement gebildet sein. Der Temperatursensor 70 stellt ein Temperatursignal T bereit, das einer Steuereinrichtung 72 (bei A) zur Verfügung gestellt wird.

Die Steuereinrichtung 72 ist dazu ausgelegt, eine Kältesteuerung durchzuführen, wie es schematisch bei 74 angedeutet ist.

Der geschlossene Kühlmittelkreislauf 56 ist vorliegend nach der Art eines Kühlmittelkreislaufs ausgebildet und beinhaltet einen Verdichter 76, dem das erwärmte Kühlmittel 60 zugeführt wird. Der Verdichter 76 (beispielsweise ein Kompressor) ist in an sich bekannter Weise mit einem Kondensator 78 verbunden, dessen Ausgang wiederum über eine Drossel 80 mit einer Zufuhr des Kühlmittels 58 hin zu dem Wärmeübertrager 52 verbunden ist.

Anstelle eines derartigen Kühlmittelkreislaufes kann jedoch auch ein herkömmlicher Kühlmittelkreislauf eingerichtet werden, bei dem das erwärmte Kühlmittel 60 einem Kühler zugeführt wird. Der dargestellte Kühlmittelkreislauf kann jedoch sehr hohe Kühlleistungen bereitstellen und Kühlmittel mit so niedrigen Temperaturen bereitstellen, die unterhalb des Gefrierpunktes von Wasser liegen können.

Während eines Zerspanungsprozesses wird die Temperatur T des Schneidelementes 30 erfasst und die Steuerung 72 steuert den geschlossenen Kühlmittelkreislauf 56 so an, dass eine Temperatur des Schneidelementes 30 unterhalb eines vorbestimmten Grenzwertes bleibt. Durch die Kopplung des Wärmeübertragers 52 über das Wärmeleitelement 66 mit dem Schneidelement 30 kann die im Bereich des Schneidelementes 30 entstehende Zerspanungswärme effizient abgeführt werden, sodass zu hohe Temperaturen während des Zerspanungsprozesses vermieden werden können.

Die Steuereinrichtung 72 kann, wie es bei 82 gezeigt ist, auch zur Stellantriebssteuerung eingesetzt werden, sodass sie in diesem Fall mit dem Stellantrieb 24 verbunden ist. Ggf. kann die Steuereinrichtung 72 auch dazu ausgelegt sein, den Motor 16 anzusteuern, was in Fig. 1 jedoch nicht näher dargestellt ist.

Das Zerspanungswerkzeug 20 beinhaltet ferner eine Schneidelement-Heizeinrichtung 86. Die Schneidelement-Heizeinrichtung 86 ist in einer Heizeinrichtungs-Aufnahme 87 des Werkzeughalters 28 aufgenommen. Die Schneidelement-Heizeinrichtung 86 ist ebenfalls in der Nähe des Schneidelementes 30 innerhalb des Werkzeughalters 28 angeordnet und kann ebenfalls mit dem Wärmeleitelement 66 gekoppelt sein, kann jedoch auch hiervon entkoppelt sein, wie es in Fig. 1 dargestellt ist. Die Schneidelement-Heizeinrichtung 86 ist mit einer Heizstromquelle 88 verbunden, über die ein Heizstrom i_{H} bereitgestellt wird. Die Schneidelement-Heizeinrichtung 86 ist vorzugsweise eine elektrische Heizeinrichtung, bei der elektrischer Strom in Wärme umgesetzt wird.

Die Heizstromquelle 88 ist über eine Heizsteuerung 90 mit der Steuereinrichtung 72 verbunden.

Mittels der Schneidelement-Heizeinrichtung 86 ist es möglich, die Temperatur des Schneidelementes 30 zu regeln, insbesondere innerhalb eines vorbestimmten Soll-Temperaturbereiches zu halten. Dabei wird mittels der Kühleinrichtung 50 vorzugsweise eine Temperatur im unteren Bereich des Soll-Temperaturbereiches eingestellt oder sogar darunter. Die Kühleinrichtung 50 ist in der Regel relativ träge. Die Schneidelement-Heizeinrichtung 86 kann jedoch sehr schnell ein- und ausgeschaltet bzw. geregelt werden. Demzufolge wird vorliegend die Heizsteuerung 90 vorzugsweise verwendet, um die Temperatur schnell einzustellen und innerhalb des Soll-Temperaturbereiches zu halten.

Auf diese Weise ist es möglich, Zerspanungsprozesse durchzuführen, die beispielsweise bestimmte Temperaturen nicht überschreiten, wie Temperaturen, die zu Diffusionen von Schneidstoff in das Werkstück führen könnten oder dergleichen.

Bei 94 ist gezeigt, dass in den Werkzeughalter 28 optional eine weitere Heizeinrichtung in Form einer Halterbasis-Heizeinrichtung 94 integriert sein kann, die mittels eines entsprechenden Heizstromes i_{HS} erwärmt wird. Eine derartige Halterbasis-Heizeinrichtung 94 ist vorzugsweise in einem Spannbereich des Werkzeughalters 28 angeordnet, insbesondere im Bereich des Werkzeughalterschaftes 40. Wenn die Kühleinrichtung 50 den Werkzeughalter 28 zu stark herunterkühlt, kann sich die Einspannung des Werkzeughalterschaftes 40 mittels der Werkstückspanneinrichtung 22 lockern, insbesondere, wenn diese als Schrumpfspannung realisiert ist. Durch die Halterbasis-Heizeinrichtung 94 kann die Temperatur im Bereich des Werkzeughalterschaftes 40 so weit erhöht werden, dass eine sichere Einspannung gewährleistet ist.

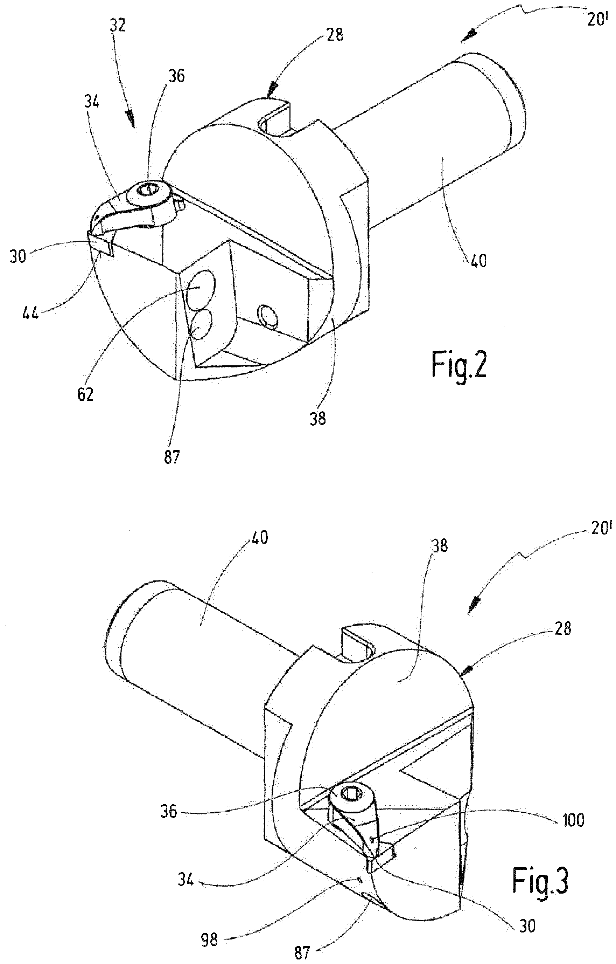

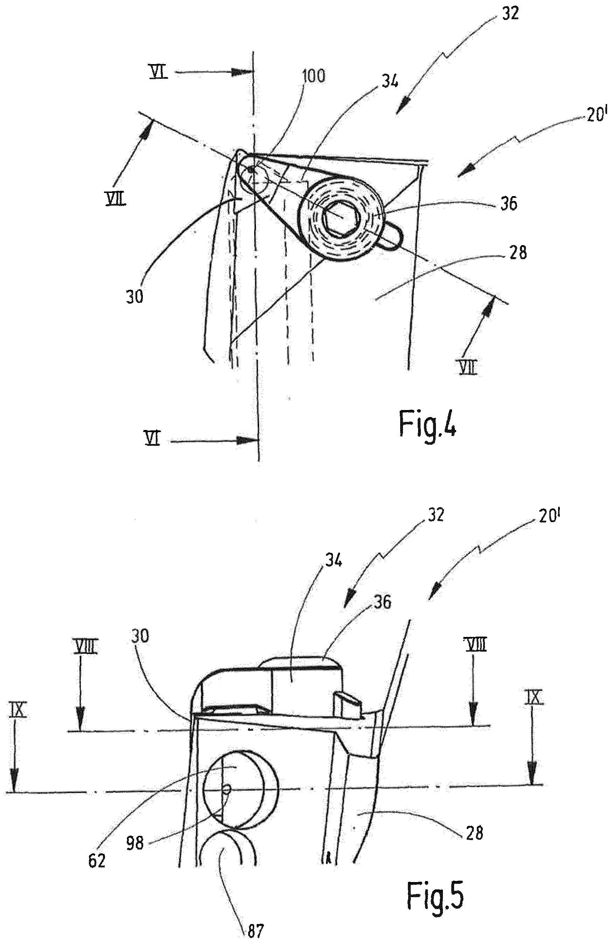

in den Fig. 2 bis 9 ist eine weitere Ausführungsform eines Zerspanungswerkzeuges 20' dargestellt, das hinsichtlich Ausführung und Funktionsweise generell dem Zerspanungswerkzeug 20 der Fig. 1 entspricht. Gleiche Elemente sind daher durch gleiche Bezugszeichen gekennzeichnet. Im Folgenden werden im Wesentlichen die Unterschiede erläutert.

Wie es in den Fig. 2 und 3 gezeigt ist, sind bei dem Zerspanungswerkzeug 20 die Wärmeübertrager-Aufnahme 62 und die Heizeinrichtungs-Aufnahme 87 jeweils durch Bohrungen gebildet, die quer zu einer Längsachse des Werkzeughalterschaftes 40 ausgerichtet sind. Die Wärmeübertrager-Aufnahme 62 ist dabei als Sacklochbohrung ausgebildet, wohingegen die Heizeinrichtungs-Aufnahme 87 als Durchgangsbohrung ausgerichtet ist. Die Aufnahmen 62, 87 sind dabei vorzugsweise etwa parallel zu der Sitzfläche 44 ausgerichtet. Die Wärmeübertrager-Aufnahme 62 ist in Richtung quer zu der Längsachse des Werkzeughalterschaftes 40 zwischen dem Schneidelementsitz 42 und der Heizeinrichtungs-Aufnahme ausgerichtet.

In Fig. 3 ist zu sehen, dass die Wärmeübertrager-Aufnahmebohrung 62 im Bereich ihres Bodens, der etwa unterhalb der Sitzfläche 44 angeordnet ist, eine Entlüftungsöffnung 98 aufweist.

Das Wärmeübertragergehäuse 54 wird in die Wärmeübertrager-Aufnahmebohrung 62 entlang seiner Längsachse 55 eingeschoben, wobei ggf. eine warme Leitpaste dazwischen angeordnet wird. Diese kann den Umfangsbereich abdichten, sodass durch die Entlüftungsöffnung 98 das Bilden einer Luftblase im Bereich der Sacklochbohrung 62 vermieden werden kann.

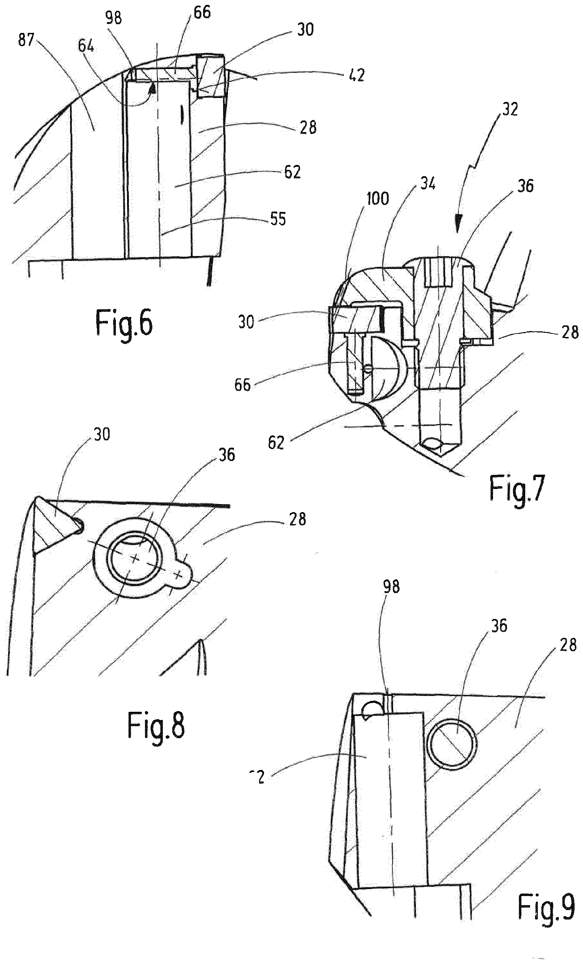

In den Figuren ist ferner bei 100 eine Temperatursensorbohrung 100 in der Pratze 34 gezeigt, die am besten in Fig. 7 zu erkennen ist. Die Temperatursensorbohrung 100 erstreckt sich als Durchgangsbohrung durch einen vorderen Teil der Pratze hindurch und ist vorzugsweise schräg geneigt zu einer Oberfläche des Schneidelementes 30 ausgerichtet, an der die Pratze 34 angreift.

In Fig. 6 ist zu erkennen, dass die Wärmeübertrager-Aufnahmebohrung 62 sich bis in das Wärmeleitelement 66 hinein erstreckt, um eine möglichst große Wärmeübertragungsfläche zu realisieren.

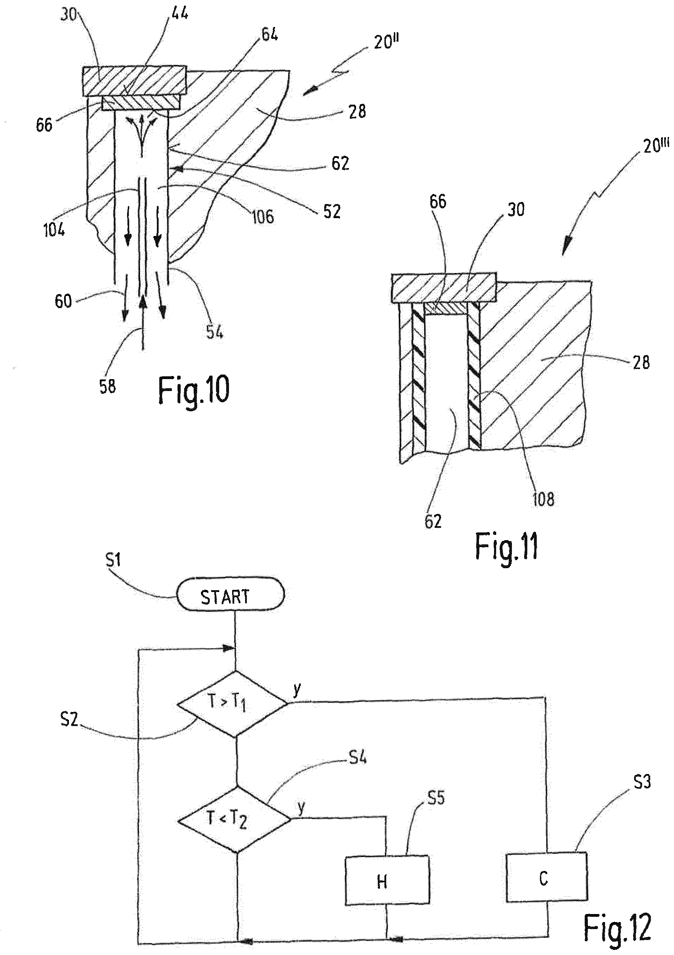

In den Fig. 10 und 11 sind weitere Ausführungsformen von Zerspanungswerkzeugen schematisch dargestellt, die hinsichtlich Aufbau und Funktionsweise generell dem Zerspanungswerkzeug 20 der Fig. 1 entsprechen. Gleiche Elemente sind daher durch gleiche Bezugszeichen gekennzeichnet. Im Folgenden werden im Wesentlichen die Unterschiede erläutert.

Bei dem in Fig. 10 gezeigten Zerspanungswerkzeug 20" ist eine Wärmeübertrager-Aufnahmebohrung 62 generell senkrecht zu der Sitzfläche 44 ausgerichtet. Das Wärmeleitelement 66 kann in diesem Fall beispielsweise durch eine Scheibe oder Platte gebildet sein, die zwischen der Stirnfläche 64 und der Sitzfläche 44 angeordnet ist. Auch in diesem Fall ist jedoch vorzugsweise ein Wärmeleitelement 66 dazwischen vorgesehen, da auf diese Weise die Sitzfläche 44 zumindest teilweise durch das Wärmeleitelement 66 gebildet werden kann und ferner ein direkter Kontakt zwischen dem Wärmeübertragergehäuse 54 und dem Schneidelement 30 vermieden kann, sodass das Wärmeübertragergehäuse 54 besser geschützt werden kann.

In Fig. 10 ist ferner zu erkennen, dass der Wärmeübertrager 52 so ausgebildet sein kann, dass er einen sich zentral in das Wärmeübertragergehäuse 54 hinein erstreckenden Kühlmittelkreislauf 104 aufweist, der kurz vor der Stirnfläche 64 endet, sodass das Kühlmittel hierdurch auf die Stirnfläche 64 gerichtet werden kann. Ferner beinhaltet der Wärmeübertrager 52 einen konzentrisch um den Kühlmittelkreislauf 104 herum angeordneten Rückströmkanal 106, über den das erwärmte Kühlmittel abgeführt werden kann, wie es bei 60 dargestellt ist. Eine derartige Konstruktion des Wärmeübertragers kann auch bei den vorherigen Ausführungsformen oder bei den nachfolgenden Ausführungsformen verwendet werden.

In Fig. 11 ist ein Zerspanungswerkzeug 20‴ gezeigt, bei dem um die Wärmeübertrager-Aufnahme 62 herum ein Isolationsabschnitt 108 aus einem wärmeisolierenden Material, wie beispielsweise Keramik, angeordnet ist. Hierdurch soll zum einen erreicht werden, dass der Werkzeughalter 28 möglichst konzentriert bzw. ausschließlich im Bereich des Schneidelementsitzes gekühlt wird. Mit anderen Worten kann diese Maßnahme ergänzend oder zusätzlich zu einer Halterbasis-Heizeinrichtung 94 vorgesehen werden. Denn durch den Isolationsabschnitt 108 kann ggf. vermieden werden, dass der Werkzeughalter 28 im Bereich seines Werkzeughalterschaftes zu kalt wird und sich dort die Einspannung löst.

In Fig. 12 ist in schematischer Form ein Verfahren zum Temperieren eines Schneidelementes während eines Zerspanungsprozesses gezeigt.

Das Verfahren beginnt mit einem Schritt S1 und geht anschließend in eine Abfrage S2 über, in der abgefragt wird, ob eine Temperatur T des Schneidelementes größer ist als eine erste vorbestimmte Temperatur T₁. Wenn dies der Fall ist (Y), geht das Verfahren über zum Schritt S3, bei dem dem Wärmeübertrager 52 Kühlmittel zugeführt wird, also eine Kühlung stattfindet (C).

Wenn die Temperatur T hingegen in der Abfrage S2 kleiner/gleich T₁ ist, geht das Verfahren über zum Schritt S4, in dem abgefragt wird, ob die Temperatur kleiner ist als eine zweite vorbestimmte Temperatur T₂. Wenn dies der Fall ist, die Temperatur des Schneidelementes also zu gering ist, geht das Verfahren bei Y über zum Schritt S5, bei dem das Schneidelement 30 erwärmt wird, und zwar mittels der Heizeinrichtung 86.

Sofern die Temperatur weder zu hoch noch zu niedrig ist, geht das Verfahren entweder an den Ausgangspunkt zurück und es erfolgt erneut eine Abfrage bei S2.

## Patentansprüche

1. Zerspanungswerkzeug (20) mit einem Werkzeughalter (28) und einem Schneidelement (30), das mit dem Werkzeughalter (28) verbunden ist, und mit einer Kühleinrichtung zum Kühlen des Schneidelementes (30), wobei
die Kühleinrichtung (50) einen geschlossenen Kühlmittelkreislauf (56) aufweist, der einen Wärmeübertrager (52) aufweist, dem Kühlmittel (58) zugeführt wird und von dem erwärmtes Kühlmittel (60) abgeführt wird,
in den Werkzeughalter (28) ein Wärmeleitelement (66) eingesetzt ist, und wobei
zur Temperierung des Schneidelementes (30) auf den Soll-Temperaturbereich eine Regelung und zur Messung der Temperatur des Schneidelements (30) ein Pyrometer oder ein Thermoelement (70) vorgesehen ist,
die Kühleinrichtung (50) und eine Schneidelement-Heizeinrichtung (86) derart in den Werkzeughalter (28) integriert sind, dass eine Regelung der Temperatur des Schneidelementes (30) auf einen Soll-Temperaturbereich möglich ist,
**dadurch gekennzeichnet, dass**
der geschlossene Kühlkreislauf eine Kältemaschine beinhaltet,
der Wärmeübertrager (52) ein Wärmeübertragergehäuse (54) aufweist,
das in eine Wärmeübertrager-Aufnahme (62) des Werkzeughalters (28) eingesetzt ist,
in dem das als Kältemittel ausgebildete Kühlmittel (58) verdampfen kann und
aus dem das Kühlmittel (58) dampfförmig abführbar ist,
das Wärmeleitelement (66) nicht als Heat Pipe ausgebildet ist und sich zwischen dem Schneidelement (30) und dem Wärmeübertragergehäuse (54) erstreckt.

2. Zerspanungswerkzeug nach Anspruch 1, **dadurch gekennzeichnet, dass** die Schneidelement-Heizeinrichtung (86) in einer Heizeinrichtungs-Aufnahme (87) des Werkzeughalters (28) aufgenommen ist.

3. Zerspanungswerkzeug nach Anspruch 1 oder 2, **dadurch gekennzeichnet, dass** die Schneidelement-Heizeinrichtung (86) mit einer Heizstromquelle (88) verbunden ist, über die ein Heizstrom bereitstellbar ist.

4. Zerspanungswerkzeug nach Anspruch 3, **dadurch gekennzeichnet, dass** die Heizstromquelle (88) über eine Heizsteuerung (90) mit einer Steuereinrichtung (72) verbunden ist.

5. Zerspanungswerkzeug nach Anspruch 1, **dadurch gekennzeichnet, dass** der Werkzeughalter (28) eine Halterbasis (38) und einen Schneidelementsitz (42) für das Schneidelement (30) aufweist, der von der Halterbasis (38) beabstandet ist, wobei in die Halterbasis (38) eine Halterbasis-Heizeinrichtung (94) integriert ist.

6. Verfahren zum Temperieren eines Schneidelementes (30), das mit einem Werkzeughalter (28) verbunden ist, mit den Schritten:
- Bereitstellen eines Zerspanungswerkzeuges (20) nach einem der Ansprüche 1 bis 5;
- spanendes Bearbeiten eines Werkstückes (12) mittels des Zerspanungswerkzeuges (20); und
- Beeinflussen der Temperatur des Schneidelementes (30) unter Verwendung der Kühleinrichtung (50),
wobei die Temperatur des Schneidelementes (30) unter Verwendung der Kühleinrichtung (50) und einer Schneidelement-Heizeinrichtung (86) auf einen Soll-Temperaturbereich geregelt wird.

7. Verfahren nach Anspruch 6, wobei der Soll-Temperaturbereich eine Temperaturspanne von höchstens 100°C abdeckt.

8. Verfahren nach Anspruch 7, wobei der Soll-Temperaturbereich eine Temperaturspanne von höchstens 50°C abdeckt.

9. Verfahren nach Anspruch 6, wobei der Soll-Temperaturbereich in einer Spanne von 1/5 bis 1/20 einer für einen bestimmten Zerspanungsprozess angestrebten Soll-Temperatur liegt.

10. Verfahren nach Anspruch 6, wobei für einen vorbestimmten Zeitraum eine Kühlleistung der Kühleinrichtung (50) konstant gehalten wird, wobei die Regelung der Temperatur durch Einstellen der Heizleistung der Schneidelement-Heizeinrichtung (86) erfolgt.

## Claims

1. Cutting tool (20) comprising a tool holder (28) and a cutting element (30), which is connected to the tool holder (28), and a cooling device for cooling the cutting element (30), wherein
the cooling device (50) comprises a closed coolant circuit (56) comprising a heat exchanger (52) to which coolant (58) is supplied and from which heated coolant (60) is discharged,
a heat conducting element (66) is inserted into the tool holder (28), and wherein
a control system is provided for controlling the temperature of the cutting element (30) to the target temperature range and a pyrometer or a thermocouple (70) is provided for measuring the temperature of the cutting element (30),
the cooling device (50) and a cutting element heating device (86) are integrated into the tool holder (28) in such a way that it is possible to control the temperature of the cutting element (30) to a set temperature range,
**characterized in that**
the closed cooling circuit contains a refrigeration machine,
the heat exchanger (52) has a heat exchanger housing (54),
which is inserted into a heat exchanger receptacle (62) of the tool holder (28),
in which the coolant (58) in the form of a refrigerant can evaporate, and
from which the coolant (58) can be discharged in vapor form,
the heat conducting element (66) is not designed as a heat pipe and extends between the cutting element (30) and the heat exchanger housing (54).

2. Cutting tool according to claim 1, **characterized in that** the cutting element heating device (86) is accommodated in a heating device receptacle (87) of the tool holder (28).

3. Cutting tool according to claim 1 or 2, **characterized in that** the cutting element heating device (86) is connected to a heating current source (88) via which a heating current can be provided.

4. Cutting tool according to claim 3, **characterized in that** the heating current source (88) is connected to a control device (72) via a heating control (90).

5. Cutting tool according to claim 1, **characterized in that** the tool holder (28) has a holder base (38) and a cutting element seat (42) for the cutting element (30) which is spaced apart from the holder base (38), a holder base heating device (94) being integrated in the holder base (38).

6. Method for controlling the temperature of a cutting element (30) which is connected to a tool holder (28), comprising the steps:
providing a cutting tool (20) according to any one of claims 1 to 5;
machining of a workpiece (12) by means of the cutting tool (20); and
influencing the temperature of the cutting element (30) using the cooling device (50),
wherein the temperature of the cutting element (30) is controlled to a target temperature range using the cooling device (50) and a cutting element heating device (86).

7. Method according to claim 6, wherein the target temperature range covers a temperature range of at most 100°C.

8. Method according to claim 7, wherein the target temperature range covers a temperature range of at most 50°C.

9. Method according to claim 6, wherein the target temperature range lies within a range of 1/5 to 1/20 of a target temperature aimed at for a specific machining process.

10. Method according to claim 6, wherein a cooling power of the cooling device (50) is kept constant for a predetermined period of time, wherein the temperature is controlled by adjusting the heating power of the cutting element heating device (86).

## Revendications

1. Outil à enlèvement de copeaux (20) avec un porte-outil (28) et un élément de coupe (30) qui est connecté au porte-outil (28), et avec un dispositif de refroidissement pour le refroidissement de l'élément de coupe (30), dans lequel le dispositif de refroidissement (50) présente un circuit de réfrigérant fermé (56) qui présente un caloporteur (52) auquel du réfrigérant (58) est acheminé et duquel du réfrigérant chauffé (60) est évacué,
un élément thermoconducteur (66) est inséré dans le porte-outil (28), et dans lequel
une régulation est prévue pour l'équilibrage de température de l'élément de coupe (30) à la plage de température de consigne et un pyromètre ou un élément thermique (70) est prévu pour la mesure de la température de l'élément de coupe (30),
le dispositif de refroidissement (50) et un dispositif de chauffage d'élément de coupe (86) sont intégrés dans le porte-outil (28) de telle sorte qu'une régulation de la température de l'élément de coupe (30) à une plage de température de consigne est possible,
**caractérisé en ce que**
le circuit de refroidissement fermé contient une machine frigorifique,
le caloporteur (52) présente un logement de caloporteur (54)
qui est inséré dans un réceptacle de caloporteur (62) du porte-outil (28),
dans lequel le réfrigérant (58) réalisé en tant que fluide frigorigène peut s'évaporer et
duquel le réfrigérant (58) peut être évacué sous forme de vapeur,
l'élément thermoconducteur (66) n'est pas réalisé en tant que caloduc et s'étend entre l'élément de coupe (30) et le logement de caloporteur (54).

2. Outil à enlèvement de copeaux selon la revendication 1, **caractérisé en ce que** le dispositif de chauffage d'élément de coupe (86) est reçu dans un réceptacle de dispositif de chauffage (87) du porte-outil (28).

3. Outil à enlèvement de copeaux selon la revendication 1 ou 2, **caractérisé en ce que** le dispositif de chauffage d'élément de coupe (86) est connecté à une source de courant de chauffage (88) par le biais de laquelle un courant de chauffage peut être mis à disposition.

4. Outil à enlèvement de copeaux selon la revendication 3, **caractérisé en ce que** la source de courant de chauffage (88) est connectée à un dispositif de commande (72) par le biais d'une commande de chauffage (90).

5. Outil à enlèvement de copeaux selon la revendication 1, **caractérisé en ce que** le porte-outil (28) présente une base de support (38) et un siège d'élément de coupe (42) pour l'élément de coupe (30) qui est espacé de la base de support (38), dans lequel un dispositif de chauffage de base de support (94) est intégré dans la base de support (38).

6. Procédé d'équilibrage de température d'un élément de coupe (30) qui est connecté à un porte-outil (28), avec les étapes :
- mise à disposition d'un outil à enlèvement de copeaux (20) selon une des revendications 1 à 5 ;
- usinage par enlèvement de copeaux d'une pièce à usiner (12) au moyen de l'outil à enlèvement de copeaux (20) ; et
- influence de la température de l'élément de coupe (30) par utilisation du dispositif de refroidissement (50),
dans lequel la température de l'élément de coupe (30) est régulée sur une plage de température de consigne par utilisation du dispositif de refroidissement (50) et d'un dispositif de chauffage d'élément de coupe (86).

7. Procédé selon la revendication 6, dans lequel la plage de température de consigne couvre un écart de température d'au plus 100 °C.

8. Procédé selon la revendication 7, dans lequel la plage de température de consigne couvre un écart de température d'au plus 50 °C.

9. Procédé selon la revendication 6, dans lequel la plage de température de consigne se situe dans un écart de 1/5 à 1/20 d'une température de consigne visée pour un processus d'enlèvement de copeaux déterminé.

10. Procédé selon la revendication 6, dans lequel une puissance de refroidissement du dispositif de refroidissement (50) est maintenue constante pendant une durée prédéterminée, dans lequel la régulation de la température s'effectue par réglage de la puissance de chauffage du dispositif de chauffage d'élément de coupe (86).
